(19) Europäisches Patentamt
European Patent Office
Office européen des brevets

(11) EP 2 280 042 A1

(12) EUROPEAN PATENT APPLICATION

(43) Date of publication:
02.02.2011 Bulletin 2011/05

(51) Int Cl.:
C08K 3/34 (2006.01)
C08J 5/18 (2006.01)
B29C 67/20 (2006.01)
B65D 65/20 (2006.01)
B65D 81/30 (2006.01)
C08K 9/04 (2006.01)
B29C 55/02 (2006.01)
C08K 7/00 (2006.01)
B65D 81/24 (2006.01)

(21) Application number: 10170888.1

(22) Date of filing: 27.07.2010

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR
Designated Extension States:
BA ME RS

(30) Priority: 28.07.2009 JP 2009175476

(71) Applicant: FUJIFILM Corporation
Tokyo 106-0031 (JP)

(72) Inventors:
• Sasaki, Hiroki
Kanagawa (JP)
• Goto, Yasutomo
Kanagawa (JP)
• Ogura, Tooru
Kanagawa (JP)

(74) Representative: HOFFMANN EITLE
Patent- und Rechtsanwälte
Arabellastraße 4
81925 München (DE)

(54) **Void-containing resin molded product**

(57) A void-containing resin molded product, containing tabular grains each having an aspect ratio of 2 to 1,000, wherein the void-containing resin molded product contains voids therein, and wherein the aspect ratio of the tabular grain is defined as the following Equation (I):

$$\text{Aspect ratio} = (\text{Mean length of a side of the tabular grain}) / (\text{Mean thickness of the tabular grain}) \qquad \text{Equation (I)}$$

**Description**

BACKGROUND OF THE INVENTION

Field of the Invention

The present invention relates to a void-containing resin molded product.

Description of the Related Art

A void-containing resin molded product having light blocking ability is disclosed in International Publication No. WO 08/129715, and a void-containing resin molded product using immiscible resins is disclosed in Japanese Patent Application Laid-Open (JP-A) No. 04-202540. These void-containing resin molded products, however, have high permeability to gases because of the voids they contain.

In JP-A No. 05-293916, a tube which contains a polyamide and layered silicate and which is excellent in tube performance in terms of considerable prevention of fuel permeation through the wall, strong low-temperature impact resistance, and high flexural rigidity is disclosed. This tube, however, has low light blocking ability.

Molded products satisfying both high light blocking ability and considerable gas permeation preventability may be useful for use in image-receiving layers of thermosensitive transfer image-receiving sheets, and for use as packaging media for wrapping materials containing such substances as pigments, which degrade in the presence of light and/or oxygen. Since such molded products satisfying the properties mentioned above have not been developed yet, it is desired that such molded products be produced.

BRIEF SUMMARY OF THE INVENTION

The present invention addresses the above problems of the related art and aims to achieve the following object. Accordingly, an object of the present invention is to provide a void-containing resin molded product which has high light blocking ability while having desirably low gas permeability and which has strong tearing resistance.

Means for solving the above problems are as follows:

<1> A void-containing resin molded product, containing:

tabular grains each having an aspect ratio of 2 to 1,000,
wherein the void-containing resin molded product contains voids therein, and
wherein the aspect ratio of the tabular grain is defined as the following Equation (I):

$$\text{Aspect ratio} = (\text{Mean length of a side of the tabular grain}) / (\text{Mean thickness of the tabular grain}) \qquad \text{Equation (I)}$$

<2> The void-containing resin molded product according to <1>, wherein the tabular grains have a mean side length of 0.002 $\mu$m to 1 $\mu$m.

<3> The void-containing resin molded product according to any one of <1> and <2>, wherein the tabular grain is layered silicate.

<4> The void-containing resin molded product according to <3>, wherein the layered silicate is layered phyllosilicate.

<5> The void-containing resin molded product according to <4>, wherein the layered phyllosilicate is at least one selected from montmorillonite, saponite, viderite, nontronite, hectorite, stevensite, vermiculite, and hallosite.

<6> The void-containing resin molded product according to any one of <1> to <5>, wherein the void-containing resin molded product has optical transmittance of 30% or less to light having a wavelength 550 nm.

<7> The void-containing resin molded product according to any one of <1> to <6>, wherein the voids have substantially no nucleus therewithin.

<8> The void-containing resin molded product according to any one of <1> to <6>, wherein each of the voids have a nucleus therewithin.

According to the present invention, the above problems of the related art can be solved, the above object can be achieved, and a void-containing resin molded product which has high light blocking ability while having desirably low gas permeability and which has strong tearing resistance is provided.

## BRIEF DESCRIPTION OF THE DRAWINGS

FIG. 1 is a view showing an example production process of the void-containing resin molded product of the present invention.
FIG. 2A is a perspective view showing the void-containing resin molded product of the present invention.
FIG. 2B is a cross-sectional view of the void-containing resin molded product taken as indicated by line A - A' in FIG. 2A.
FIG. 2C is a cross-sectional view of the void-containing resin molded product taken as indicated by line B - B' in FIG. 2A.

## DETAILED DESCRIPTION OF THE INVENTION

(Void-containing resin molded product)

A void-containing resin molded product of the present invention is not particularly limited and may be appropriately selected depending on the purpose, as far as it contains therewithin voids and the tabular grains which will be described later.
The shape of the void-containing resin molded product is not particularly limited, may be appropriately selected depending on the purpose and includes, for example, shapes of films, sheets, fibers, and the like.
The void-containing resin molded product may be obtained, for example, by the following production process.

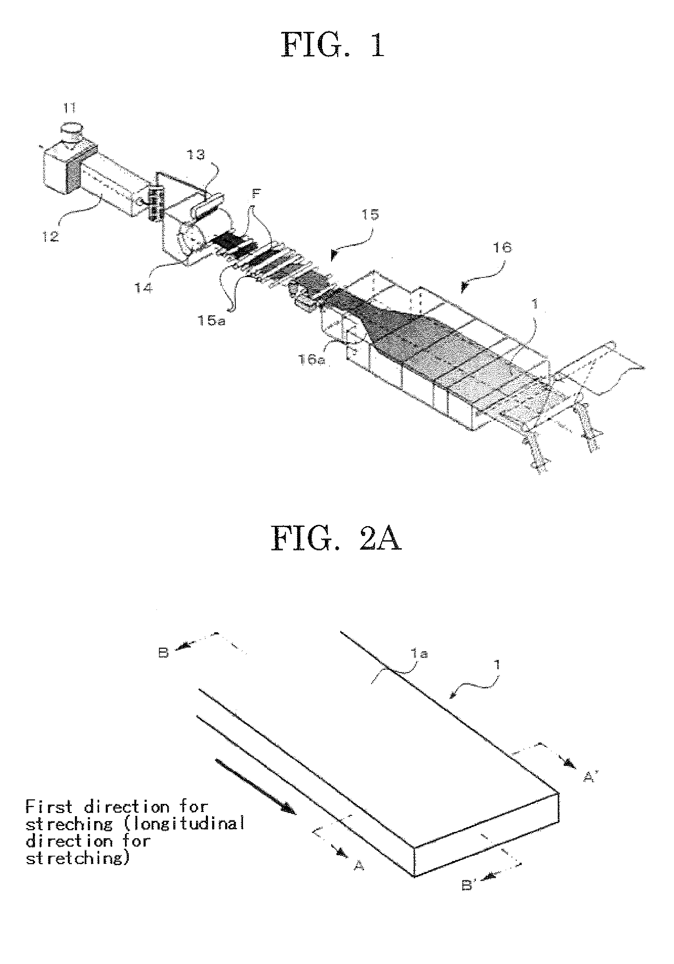

FIG. 1 is a view showing an example production process of the void-containing resin molded product and showing an operation flow of biaxially stretched film manufacturing equipment. The biaxially stretched film manufacturing equipment shown in FIG. 1 is film manufacturing equipment performing stretching by roll-to-roll processing.
As shown in FIG. 1, after a raw resin material (polymer composition) 11 is heat-melted and kneaded inside an extruder 12 (which may be a biaxial extruder or a monoaxial extruder, employed depending on a shape of a raw material and the manufacturing scale of the void-containing resin molded product), it is ejected as a soft tabular (film-shaped or sheet-shaped) material from a T die 13.
Next, the ejected soft film or sheet F is cooled and solidified on a casting drum 14 to form a film or sheet. Thus formed film or sheet F is fed into a longitudinal film stretching machine 15.
Then, the formed film or sheet F is heated again in the longitudinal film stretching machine 15 and stretched in the longitudinal direction between rolls 15a each having a different velocity. As a result of this longitudinal stretching, voids are formed within the thus stretched film or sheet F in the direction in which the film or sheet F is stretched. Subsequently, the void-formed film or sheet F is clipped by both edges thereof with right and left clips 16a of a lateral film stretching machine 16, stretched in the horizontal direction while being fed to the winder side (not shown), thereby forming a void-containing resin molded product 1. Note that a film or sheet F which has been subjected only to the longitudinal stretching in the previous step and which is not subjected to stretching by the lateral film stretching machine 16, may be used as the void-containing resin molded product 1.
The void-containing resin molded product is a polymer molded product.
The polymer molded product contains a polymer composition containing one or more crystalline polymers, and optionally contains additional components as required.

-Polymer composition-

The polymer composition contains one or more crystalline polymers and the tabular grains which will be described later, and optionally contains additional components which does not aid in the void formation, as required.

<Crystalline Polymer>

Polymers are generally divided into polymers having crystallinity (crystalline polymers) and non-crystalline (amorphous) polymers. The polymers having crystallinity are not necessarily formed of crystals only. Rather, the polymers having crystallinity contain, in a molecular structure thereof, a crystalline region in which long chains of the molecule are aligned in a regular way and a non-crystalline (amorphous) region in which long chains of the molecule are not aligned in a regular way.
Thus, the crystalline polymer for the polymer molded products of the present invention contain at least the crystalline region in a molecular structure thereof and may also contain the non-crystalline region along with the crystalline region.

The crystalline polymer is not particularly limited and may be appropriately selected depending on the intended purpose. Examples thereof include high-density polyethylenes, polyolefins (such as polypropylenes, polyethylenes, ethylene-vinyl acetate copolymers, ethylene-vinyl alcohol copolymers, ethylene-cycloolefin copolymers, polybutene-1, and poly-4-methylpentene-1), polyamides (PA) (such as Nylon 6), polyacetals (POM), polyesters (such as PET, PEN, PTT, PBT, PPT, PHT, PBN, PES, and PBS), syndiotactic polystyrenes (SPS), polyphenylene sulfides (PPS), polyether ether ketones (PEEK), liquid crystal polymers (LCP), and fluororesins. Of these, polyolefins, polyesters, polyamides, syndiotactic polystyrenes (SPS), and liquid crystal polymers (LCP) are preferred from the viewpoints of their mechanical strength and readiness for production. Polyesters and polyamides are particularly preferred.

The melt viscosity of the crystalline polymer is not particularly limited and may be suitably selected depending on the intended purpose. The melt viscosity thereof is preferably 50 Pa·s to 700 Pa.s, more preferably 70 Pa·s to 500 Pa·s, and still more preferably 80 Pa·s to 300 Pa.s. The crystalline polymer having a melt viscosity of 50 Pa·s to 700 Pa·s is preferable because the melted film ejected from a die head during the film melt-forming process is stabilized in shape so that a uniform film thereof is easily formed. Moreover, the crystalline polymer having a melt viscosity of 50 Pa·s to 700 Pa·s provides the benefit such that the viscosity of the polymer is appropriate for extrusion in the film melt-forming process and irregularity of a surface of the melted film is reduced because the melted film produced in the film-forming process is easy to level.

The melt viscosity can be measured by a plate-type rheometer and a capillary rheometer.

The melt flow rate (MFR) of the crystalline polymer is not particularly limited, may be appropriately selected depending on the intended purpose, and is preferably 0.1 (g/10 min) to 100 (g/10 min), more preferably 0.5 (g/10 min) to 60 (g/10 min), and still more preferably 1 (g/10 min) to 35 (g/10 min). The crystalline polymer having an MFR of 1 (g/10 min) to 35 (g/10 min) is particularly preferable because the thus formed film has high strength and can be stretched efficiently.

Here, the MFR can be measured using, for example, SEMI AUTO MELT INDEXER 2A (manufactured by TOYO SEIKI Co., Ltd.).

The melting temperature (Tm) of the crystalline polymer is not particularly limited, may be appropriately selected depending on the desired purpose, and is preferably 100°C to 350°C, more preferably 100°C to 300°C, and still more preferably 100°C to 260°C. The crystalline polymer having a melting point of 100°C to 350°C is preferable because it can maintain its shape in the temperature range within which the polymer is expected to be ordinarily handled. The crystalline polymer having such melting point is preferable also because the polymer can be formed into a uniform film without using special techniques that are required for high temperature processing.

The melting temperature can be measured by a differential scanning calorimeter (DSC).

--Polyester resin--

The term "polyesters" (hereinafter referred to as "polyester resins") is a collective term for polymers in which the polymer backbone is primarily formed by ester bonds. Thus, the polyester resins suitable for the above-described crystalline polymers include not only those described above (i.e., polyethylene terephthalate (PET), polyethylene naphthalate (PEN), polytrimethylene terephthalate (PTT), polybutylene terephthalate (PBT), polypentamethylene terephthalate (PPT), polyhexamethylene terephthalate (PHT), polybutylene naphthalate (PBN), polyethylene succinate (PES), and polybutylene succinate (PBS)), but also any polymer obtained through polycondensation of a dicarboxylic acid component with a diol component.

The dicarboxylic acid component is not particularly limited, and may be appropriately selected depending on the intended purpose. Examples thereof include aromatic dicarboxylic acids, aliphatic dicarboxylic acids, alicyclic dicarboxylic acids, oxycarboxylic acids, and polyfunctional acids. Of these, aromatic dicarboxylic acids are preferable.

Examples of the aromatic dicarboxylic acids include terephthalic acid, isophthalic acid, diphenyl dicarboxylic acid, diphenyl sulfone dicarboxylic acid, naphthalene dicarboxylic acid, diphenoxyethane dicarboxylic acid and 5-sodium sulfoisophthalic acid. Of these, terephthalic acid, isophthalic acid, diphenyl dicarboxylic acid, and naphthalene dicarboxylid acid are preferable, and terephthalic acid, diphenyl dicarboxylic acid, and naphthalene dicarboxylic acid are more preferable.

Examples of the aliphatic dicarboxylic acids include oxalic acid, succinic acid, eicosanoic acid, adipic acid, sebacic acid, dimer acids, dodecandionic acid, maleic acid and fumaric acid. Examples of the alicyclic dicarboxylic acids include cyclohexane dicarboxylic acid. Examples of the oxycarbxylic acids include p-oxybenzoic acid. Examples of the polyfunctional acids include trimellitic acid and pyromellitic acid. Of the aliphatic dicarboxylic acids and the alicyclic dicarboxylic acids that are mentioned above, succinic acid, adipic acid, and cyclohexane dicarboxylic acid are preferable, and succinic acid and adipic acid are more preferable.

The diol component is not particularly limited, and may be appropriately selected depending on the intended purpose. Examples thereof include aliphatic diols, alicyclic diols, aromatic diols, diethylene glycol and polyalkylene glycols. Of these, aliphatic diols are preferable.

Examples of the aliphatic diols include ethylene glycol, propanediol, butanediol, pentanediol, hexanediol, neopentyl glycol, and triethylene glycol. Of these, propanediol, butanediol, pentanediol, and hexanediol are preferable. Examples of the alicyclic diols include cyclohexanedimethanol. Examples of the aromatic diols include bisphenol A, and bisphenol S.

The melt viscosity of the polyester resin is not particularly limited, may be appropriately selected depending on the intended purpose, and is preferably 50 Pa·s to 700 Pa.s, more preferably 70 Pa·s to 500 Pa·s, and still more preferably 80 Pa·s to 300 Pa.s. Although the higher melt viscosity is more likely to result in the formation of voids during stretching of the film, the polyester resin having a melt viscosity of 50 Pa·s to 700 Pa·s is preferable because such a resin can be easily extruded during the film-forming process and can form a stable flow of resin that is less likely to stagnate. As a result, the quality of the film can be stabilized. The polyester resin having a melt viscosity of 50 Pa·s to 700 Pa·s is preferable also because the tension is suitably maintained during stretching of the film, so that the film can be stretched uniformly and is less likely to break apart. Another reason why the polyester resin having a melt viscosity of 50 Pa·s to 700 Pa·s is preferable is that such a resin can improve physical properties of the film. For example, such a resin allows the shape of the melted film ejected from a die head during the film-forming process to be easily maintained, so that the film can be shaped in a stable manner and the resulting products become less susceptible to damage.

The intrinsic viscosity (IV) of the polyester resin is not particularly limited, may be appropriately selected depending on the intended purpose, and is preferably 0.4 to 1.2, more preferably 0.6 to 1.0, and still more preferably 0.7 to 0.9. Although the higher IV is more likely to result in the formation of voids during stretching of the film, the polyester resin having an IV of 0.4 to 1.2 is preferable because such a resin can be easily extruded during the film-forming process and can form a stable flow of resin that is less likely to stagnate. As a result, the quality of the film can be stabilized. The polyester resin having an IV of 0.4 to 1.2 is preferable also because the tension is appropriately maintained during the stretching of the film, so that the film can be stretched uniformly, resulting in a decreased load exerted on the equipment. Another reason why the polyester resin having an IV of 0.4 to 1.2 is preferable is that such a resin can improve physical properties of the product, making it less susceptible to damage.

Here, the IV can be measured with a Ubbelohde viscometer.

The melting temperature of the polyester resin is not particularly limited, may be appropriately selected depending on the intended purpose, is preferably 150°C to 300°C, and more preferably 160°C to 270°C, to ensure high heat resistance and high formability of the resin into a film.

--Polyolefin resin--

The term "polyolefins" (hereinafter referred to as "polyolefin resins") means polymers which are obtained by polymerizing an α-olefin which contains a polyethylene structure as a main molecular structure thereof. Thus, the polyolefin resins suitable for the above-mentioned crystalline polymers include, as mentioned above, for example, polypropylenes, polyethylenes, ethylene-vinyl acetate copolymers, ethylene-vinyl alcohol copolymers, ethylene-cycloolefin copolymers, polybutene-1, and poly-4-methylpentene-1. Of these, polyethylenes, and polypropylenes are preferable, and polypropylenes are more preferable.

The melt viscosity of the polyolefin resin is not particularly limited, may be appropriately selected depending on the intended purpose, and is preferably 50 Pa·S to 700 Pa·s, more preferably 70 Pa·s to 500 Pa·s, and still more preferably 80 Pa·s to 300 Pa·s. Although the higher melt viscosity is more likely to result in the formation of voids during stretching of the film, the polyolefin resin having a melt viscosity of 50 Pa·s to 700 Pa·s is preferable because such a resin can be easily extruded during the film-forming process and can form a stable flow of resin that is less likely to stagnate. As a result, the quality of the film can be stabilized. The polyolefin resin having a melt viscosity of 50 Pa·s to 700 Pa·s is preferable also because the tension is suitably maintained during stretching of the film, so that the film can be stretched uniformly and is less likely to tear. Another reason why the polyolefin resin having a melt viscosity of 50 Pa·s to 700 Pa·s is preferable is that such a resin can improve physical properties of the film. For example, such a resin allows the shape of the melted film ejected from a die head during the film-forming process to be easily maintained, so that the film can be shaped in a stable manner and the resulting products become less susceptible to damage.

The melt flow rate (MFR) of the polyolefin resin is not particularly limited, may be appropriately selected depending on the intended purpose, and is preferably 0.1 (g/10 min) to 100 (g/10 min), more preferably 0.5 (g/10 min) to 50 (g/10 min), and still more preferably 1 (g/10 min) to 35 (g/10 min). Although the higher MFR is more likely to result in the formation of voids during stretching of the film, the polyolefin resin having an MFR of 0.1 (g/10 min) to 100 (g/10 min) is preferable because such a resin can be easily extruded during the film-forming process and can form a stable flow of resin that is less likely to stagnate. As a result, the quality of the film can be stabilized. The polyester resin having an MFR of 0.5 (g/10 min) to 50 (g/10 min) is more preferable because the tension is appropriately maintained during stretching of the film, so that the film can be stretched uniformly, resulting in a decreased load exerted on the equipment. The polyolefin resin having an MFR of 1 (g/10 min) to 35 (g/10 min) is still more preferable because the product is improved in physical properties and is less susceptible to damage.

The melting temperature of the polyolefin resin is not particularly limited, may be appropriately selected depending on the intended purpose, and is preferably 150°C to 300°C, and more preferably 160°C to 270°C to ensure high heat resistance and high formability of the resin into the film.

--Polyamide resin--

The term "polyamides" (hereinafter referred to as "polyamide resins") refers to polymers in which the polymer backbone is primarily formed by amide bond (-NHCO-), and produced by polycondensation of a Nylon salt, which is composed of a dicarboxylic acid and a diamine, or an aminocarboxylic acid; by ring-opening polymerization of a lactam; or by copolymerization of a nylon salt and a lactam. Examples of such polyamides include: aliphatic polyamides such as nylon 6, nylon 66, nylon 46, and nylon 12; alicyclic polyamides such as polyamides having a cyclohexane ring; polyamides obtained by polycondensation of a nylon salt, composed of an aliphatic diamine and an aromatic dicarboxylic acid such as terephtahlic acid isophtahlic acid, and others; polyamides obtained by polycondensation of a nylon salt, composed of an aliphatic diamine having an aromatic ring, such as m-xylylenediamine and p-xylylenediamine, and an aliphatic dicarboxylic acid; and polyamides obtained by polycondensation of a nylon salt composed of an aromatic diamine and an aromatic dicarboxylic acid. In addition, a mixture of these polyamides may be used.

Examples of the lactam or the aminocarboxylic acid that is a raw material of these polyamides, include ε-caprolactam, enantholactam, lauryllactam, α-pyrrolidone, α-piperidone, 6-aminocaproic acid, 7-aminoheptanoic acid, 9-aminononanoic acid, and 11-aminoundecanoic acid. Furthermore, examples of the dibasic acid that is a raw material of the nylon salt include aliphatic carboxylic acids such as malonic acid, succinic acid, glutaric acid, adipic acid, pimelic acid, suberic acid, azelaic acid, sebacic acid, undecanoic diacid, dodecanoic diacid, hexadecanoic diacid, hexadecenoic diacid, octadecanoic diacid, octadecenoic diacid, eicosanoic diacid, eicosenoic diacid, docosanoic diacid, and 2,2,4,-trimethyladipic acid; alicyclic dicarboxylic acid such as 1,4-cyclohexane dicarboxylic acid; aromatic dicarboxylic acid such as terephthalic acid, isophthalic acid, and phthalic acid; and an aliphatic dicarboxylic acid having an aromatic ring such as xylylene dicarboxylic acid.

Examples of the diamine include: aliphatic diamines such as ethylenediamine, trimethylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, tridecamethylenediamine, hexadecamethylenediamine, octadecamethylenediamie, and 2,2,4 (or 2,4,4)-trimethylhexamethylenediamine; alicyclic diamines such as cyclohexanediamine, methylcyclohexanediamine, and bis-(4,4'aminocyclohexyl) methane; aliphatic diamines that contain an aromatic ring, such as xylylenediamine.

Of the above-mentioned polyamides, nylon 6 which is a ring-opening polymer of ε-caprolactam, nylon 66 which is a polycondensation product of a nylon salt composed of hexamethylenediamine and adipic acid, and nylon MXD6 which is a polycondensation product of a nylon salt composed of m-xylylenediamine and adipic acid are preferable because they are readily available, and are easy to stretch during the film production process. Generally, the polyamides are very hygroscopic. When a polyamide which has absorbed moisture is directly used for producing a film, water vapor or oligomers which is produced during the melt-extruding process may hinder molding process. Therefore, it is preferable to provide the polyamide, which has been dried until the water content thereof becomes 0.1% by weight or less, for molding a film.

The melt viscosity of the polyamide resin is not particularly limited, may be appropriately selected depending on the intended purpose, and is preferably 50 Pa·s to 700 Pa·s, more preferably 70 Pa·s to 500 Pa·s, and still more preferably 80 Pa·s to 300 Pa.s. Although the higher melt viscosity is more likely to result in the formation of voids during stretching of the film, the polyamide resin having a melt viscosity of 50 Pa·s to 700 Pa·s is preferable because such a resin can be easily extruded during the film-forming process and can form a stable flow of resin that is less likely to stagnate. As a result, the quality of the film can be stabilized. The polyamide resin having a melt viscosity of 50 Pa·s to 700 Pa·s is preferable also because the tension is suitably maintained during stretching of the film, so that the film can be stretched uniformly and is less likely to tear. The polyamide resin having a melt viscosity of 50 Pa·s to 700 Pa·s is preferable also because such a resin can improve physical properties of the film. For example, such a resin also allows the shape of the melted film ejected from a die head during the film-forming process to be easily maintained, so that the film can be shaped in a stable manner and the resulting products become less susceptible to damage.

The melt flow rate (MFR) of the polyamide resin is not particularly limited, may be appropriately selected depending on the intended purpose, and is preferably 0.1 (g/10 min) to 100 (g/10 min), more preferably 0.5 (g/10 min) to 60 (g/10 min), and still more preferably 1 (g/10 min) to 20 (g/10 min). Although the higher MFR is more likely to result in the formation of voids during stretching of the film, the polyamide resin having an MFR of 0.1 (g/10 min) to 100 (g/10 min) is preferable because such a resin can be easily extruded during the film-forming process and can form a stable flow of resin that is less likely to stagnate. As a result, the quality of the film can be stabilized. The polyamide resin having an MFR of 0.5 (g/10 min) to 60 (g/10 min) is more preferable because the tension is appropriately maintained during stretching of the film, so that the film can be stretched uniformly, resulting in a decreased load exerted on the equipment. The polyamide resin having an MFR of 1 (g/10 min) to 20 (g/10 min) is still more preferable because the product is improved in physical properties and is less susceptible to damage.

The melting temperature of the amide resin is not particularly limited, may be appropriately selected depending on the intended purpose, and is preferably 150°C to 300°C, and more preferably 160°C to 270°C to ensure high heat resistance and high formability of the resin into the film.

--Additional components--

The additional components are not particularly limited, and may be appropriately selected depending on the intended purpose, unless the additional component enhances the void-formation.

Examples of the additional components that do not enhance the void-formation include a heat resistance stabilizer, an antioxidant, an organic lubricant, a nucleating agent, a dye, a pigment, a dispersing agent, a coupling agent, and a fluorescent brightening agent. Whether or not these components can contribute to the formation of voids can be determined by detecting the presence of other components than the crystalline polymer (such as those described below) either within the voids or at the interface of the voids.

The antioxidant is not particularly limited, may be appropriately selected depending on the intended purpose; examples thereof include known hindered phenols. Among such hindered phenols are antioxidants marketed under the trade names of IRGANOX 1010, SMILIZER BHT and SMILIZER GA-80.

The antioxidant may be used as a primary antioxidant in conjunction with a secondary antioxidant. Examples of secondary antioxidants include antioxidants marketed under the trade names of SMILIZER TPL-R, SMILIZER TPM and SMILIZER TP-D.

The fluorescent brightening agent is not particularly limited, and may be appropriately selected depending on the intended purpose. Examples thereof include those marketed under the trade names of UVITEX, OB-1, TBO, KEIKOL, KAYALITE, LEUCOPOOR and EGM. These fluorescent brightening agents may be used alone or in combination. The fluorescent brightening agent gives the void-containing resin molded product a clear, bluish white color, providing a luxurious appearance.

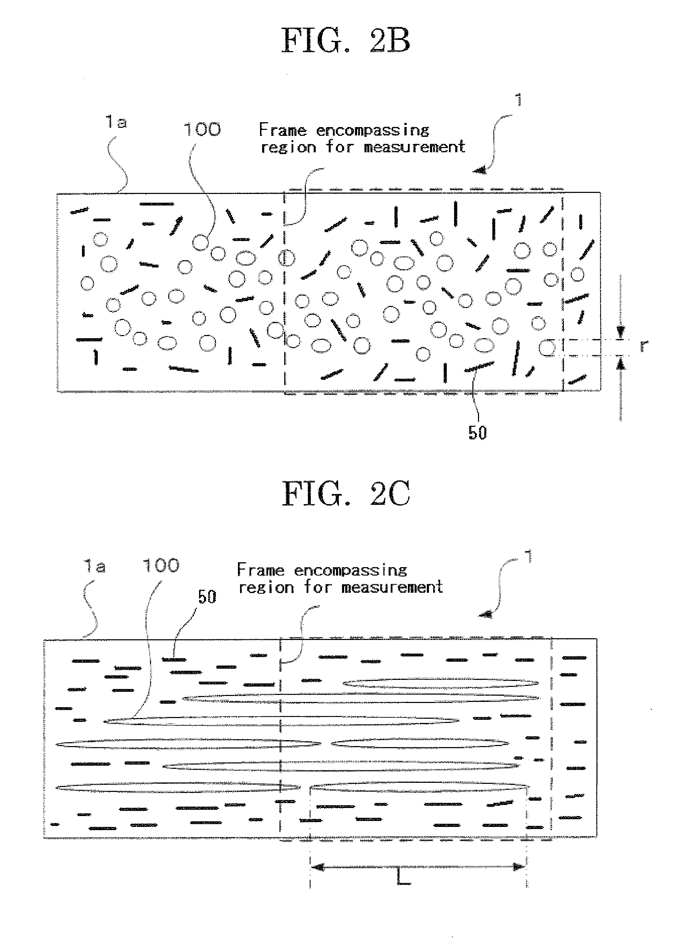

FIG. 2A is a perspective view showing the void-containing resin molded product. FIG. 2B is a cross-sectional view of the void-containing resin molded product taken as indicated by line A-A' in FIG. 2A. FIG. 2C is a cross-sectional view of the void-containing resin molded product taken as indicated by line B - B' in FIG. 2A.

The mean number P of the voids 100 measured in a through-thickness direction in the void-containing resin molded product is not particularly limited, may be appropriately selected depending on the intended purpose, and is preferably 5 or more, more preferably 10 or more, and still more preferably 15 or more.

The number of the voids 100 in the through-thickness direction can be measured under an optical microscope or by observing images taken with an electron microscope.

Thus, the void-containing resin molded product has various excellent properties with respect to, for example, the reflectance, the glossiness, and the thermal conductivity, due to its voids contained in it. That is, it is possible to adjust properties of the void-containing resin molded product, such as the reflectance, the glossiness, and the thermal conductivity, by changing aspects of the voids contained in the void-containing resin molded product.

Furthermore, as shown in FIG. 2B and FIG. 2C, the tabular grains 50 align, in the void-containing resin molded product, in a direction in which the void-containing resin molded product is stretched.

The mean number P of the tabular grains 50 measured in a through-thickness direction in the void-containing resin molded product is not particularly limited, may be appropriately selected depending on the intended purpose, and is preferably 10 or more, more preferably 15 or more, and still more preferably 20 or more.

The number of the tabular grains 50 in the through-thickness direction can be measured under an optical microscope or by observing images taken with an electron microscope.

-Light transmittance-

The light transmittance of the void-containing resin molded product is preferably 30% or less, more preferably 25% or less, and still more preferably 20% or less, to light having a wavelength of 550 nm.

When the light transmittance thereof is higher than 30%, the reflectance may be reduced. Meanwhile, when the transmittance of light is within the above still more preferable range, it is possible to advantageously achieve high light blocking ability while realizing desirably low gas permeability of the void-containing resin molded product.

Here, the light transmittance can be measured using a spectrophotometer.

-Gas permeation preventability-

The gas permeability of the void-containing resin molded product as measured by the oxygen permeability is preferably 200 cc·mm/(m$^2$·day·atm)or less, more preferably 150 cc·mm/(m$^2$·day·atm)or less, and still more preferably 100 cc·mm/(m$^2$·day·atm)or less.

When the oxygen permeability is higher than 200 cc·mm/(m$^2$·day·atm), contents of the void-containing resin molded product may be oxidized and degraded with time. Meanwhile, when the oxygen permeability is within the still more preferable range, contents of the void-containing resin molded product may be advantageously kept in a sufficiently fresh state even with time.

Note that the oxygen permeability is a value measured in accordance with the equal-pressure method (Test method: JIS K7126-2B ASTM D3985; ISO 15105-2 2003) using OX-TRAN 2/20MH (manufactured by MOCON).

-Tearing resistance-

The tearing resistance of the void-containing resin molded product is preferably 10 N/cm or more, more preferably 70 N/cm or more, and still more preferably 100 N/cm or more.

When the tearing strength is less than 10 N/cm and the void-containing resin molded product is used for a packaging material and the like, the void-containing resin molded product in the form of the packaging material may be easily broken by an impact or the like, due to considerable ease of cracking. Meanwhile, when the void-containing resin molded product has a tearing strength that is within the still more preferable range, the void-containing resin molded product advantageously becomes resistant to an impact, and shows favorable breakability along a straight line when it is used for a packaging material.

Note that the tearing strength is a measurement determined in accordance with Elmendorf method (JIS K 7128; ISO 6383) using a digital elmendorf tear tester (SA-WP, manufactured by TOYO SEIKI SEISAKU-SHO, LTD).

-Reflectance-

The reflectance of the void-containing resin molded product for light of wavelength 550 nm is preferably 50% or more, more preferably 60% or more, and still more preferably 70% or more.

When the reflectance of the void-containing resin molded product is less than 50%, the light blocking ability of the void-containing resin molded product may be reduced. Meanwhile, when the reflectance is within the still more preferable range, it is possible to ensure sufficient light blocking ability and prevent degradation of contents of the void-containing resin molded product.

The reflectance for light of wavelength 550 nm is a measurement determined using an integrating sphere-equipped spectrophotometer (V-570, manufactured by JASCO Corporation).

-Surface smoothness-

The smoothness of a surface of the void-containing resin molded product is not particularly limited, may be appropriately selected depending on the intended purpose, and is preferably an Ra of 0.3 μm or less, more preferably an Ra of 0.25 μm or less, and still more preferably an Ra of 0.1 μm or less.

-Stiffness-

The void-containing resin molded product has high stiffness, even when it is thin. The stiffness of the void-containing resin molded product is quantified and evaluated by subjecting the void-containing resin molded product to a loop stiffness tester (manufactured by TOYO SEIKI SEISAKU-SHO, LTD.; loop size: 15 mm x 165 mm, loop circumference: 100 mm). The loop stiffness of the void-containing resin molded product is preferably 0.20 kg/cm$^2$ to 0.70 kg/cm$^2$.

<Void>

The term "void" means a domain which exists in the resin molded product and is a vacuum or contains only a gas phase.

The void of the void-containing resin molded product is not particularly limited, may be appropriately selected depending on the purpose, and may have a nucleus or have substantially no nucleus. Preferably, the void preferably has substantially no nucleus from the viewpoint of the appearance of the void-containing resin molded product such as existence of wrinkles, chips, cracks, and the like on the void-containing resin molded product.

The voids are considered as having substantially no nucleus, when a ratio [(number of voids having a nucleus) / (total number of voids)] is less than 5%, wherein the number of voids having a nucleus and the total number of voids are counted per 1,000 $\mu m^2$ by a process including taking and observing a photograph of a cross-section of a void-containing resin molded product with a scanning electromicroscope at a magnification of $\times 600$ to $\times 10,000$.

Furthermore, the void-containing resin molded product with a void substantially having some nuclei is not particularly limited, may be appropriately selected depending on the intended purpose; examples thereof include CRISPER (manufactured by TOYOBO CO., LTD.) and LUMIRROR 60L (manufactured by TORAY INDUSTRIES, INC.).

The void-containing resin molded product produced by the above-mentioned production method may contain therewithin elongated voids having their longitudinal axes aligned in one direction.

<Tabular grain>

An aspect ratio of the tabular grain is not particularly limited and may be appropriately selected depending on the intended purpose, as far as it is in the range of 2 to 1,000, and is preferably 3 to 800, more preferably 4 to 600, and still more preferably 5 to 500.

When the aspect ratio of the tabular grain is lower than 2, the gas permeability may remain high even through the tabular grains are contained in the void-containing resin molded product. When the aspect ratio is higher than 1,000, the tabular grains may be unevenly distributed in the void-containing resin molded product during the film forming process (degradation of production process), the tearing resistance may be degraded, and the cost of the void-containing resin molded product may be increased. Meanwhile, when an aspect ratio is within the still more preferable range, it is possible to achieve various properties such as desirable gas permeability, while achieving favorable production process.

Note that the aspect ratio of the tabular grain is calculated in accordance with the following equation (I):

$$\text{Aspect ratio} = (\text{mean side length of tabular grains}) / (\text{mean thickness of tabular grains}) \qquad \text{Equation (I)}$$

wherein the mean side length of tabular grains and the mean thickness of the tabular grains are calculated based on the length of a side and the thickness of the tabular grains, which are obtained by a process including preparing ultra-thin sections (50 nm - 100 nm) of the tabular grains using a microtome, and measuring the length of a side and the thickness of 100 points of the tabular grains by means of a transmission electron microscope (JEM 2010, manufactured by JEOL Ltd.).

The mean side length of the tabular grains is not particularly limited, may be appropriately selected depending on the intended purpose, and is preferably 0.002 $\mu m$ to 1 $\mu m$, more preferably 0.02 $\mu m$ to 0.8 $\mu m$, and still more preferably 0.05 $\mu m$ to 0.6 $\mu m$.

When the mean side length of the tubular grains is shorter than 0.002 $\mu m$, the film-forming process may be degraded because of increase of a melt flow rate during the film-forming process, or the gas permeability may undesirably increase. When the mean side length of a side of the tabular grains is longer than 1 $\mu m$, a film having an uneven thickness may be formed during the film-forming process, or a film may be split apart during the film-stretching process. Meanwhile, when the mean side length of tabular grains is within the still more preferable range, the film containing such tabular grains is advantageous from the viewpoint of achieving both excellent film properties and an excellent production process.

The mean side length of the tabular grains are calculated by a process including observing and measuring the side length of each of 100 tabular grains (i.e. 100 points), which are randomly selected, using a transmission electron microscope (JEM 2010, manufactured by JEOL Ltd.), and calculating the mean of the values of the side length of the tabular grains.

The material for the tabular grains is not particularly limited, may be appropriately selected depending on the intended purpose; an example thereof include layered silicate, and the like.

«Layered silicate»

The layered silicate is not particularly limited and may be appropriately selected depending on the intended purpose; examples thereof include layered phyllosilicate composed of layers of magnesium silicate, aluminum silicate, and the like.

Examples of the layered phyllosilicate include: smectite clay minerals such as montmorillonite, saponite, viderite, nontronite, hectorite, and stevensite; vermiculite; and hallosite. These may be natural products or synthetic products.

When the layered silicate is dispersed in a composition, each particle of the layered silicate preferably keeps a mean interlayer distance of 2 nm or wider and is uniformly dispersed. Here, the "interlayer distance" means a distance between the centers of gravity of the two adjacent layers of the layered silicate. The "uniformly dispersed" state means a state in which 50% by weight or more, preferably 70% by weight or more of the layered silicate particles are dispersed without forming a local mass which is composed of multilayered particles having 5 or less, on average, of silicate layers, aggregating parallel and/or nonparallel to one another.

The tabular grains herein are not substantially involved in the formation of the voids. The tabular grains are not considered as being substantially involved in the formation of the voids, when a ratio [(number of voids having a tabular grain as nucleus for void formation) / (total number of voids)] is less than 5%, wherein the number of voids having a tabular grain as nucleus for void formation and the total number of voids are counted per 1,000 $\mu m^2$ by a process including taking and observing a photograph of a cross-section of a void-containing resin molded product with a scanning electromicroscope at a magnification of $\times 600$ to $\times 10,000$.

<Image-receiving layer of thermosensitive transfer image-receiving sheet>

When the void-containing resin molded product of the present invention is used for an image-receiving layer of a thermosensitive transfer image-receiving sheet, light fastness of pigments in the image-receiving layer may be improved because the heat insulating ability of the image-receiving layer is increased and the oxygen permeability of the image-receiving layer is reduced.

<Packaging material>

The packaging material containing the void-containing resin molded product of the present invention has both excellent light blocking ability and desirably low gas permeability, in addition to excellent tearing resistance, and thus may prevent degradation, caused by light and gas (e.g. oxygen), of substances in a container wrapped in the packaging material of the present invention.

Examples

Hereinafter, the Examples of the present invention will be described, which, however, should not be construed as limiting the scope of the present invention.

(Example 1)

<Preparation of void-containing resin molded product>

First, the tabular grains of montmorillonite (aspect ratio: 200; and mean length of a side thereof: 1 $\mu m$) synthesized with reference to a method according to JP-A No. 2007-308361 were organofunctionalized with 12-aminododecanoic acid, with reference to a method according to JP-A No.62-74957. Next, 100 kg $\varepsilon$-caprolactam and 4 kg of the organofunctionalized montmorillonite were subjected to a polycondensation reaction (in-situ polymerization: this method is referred to Method A of a grain packing method) with reference to a method according to the above JP-A No. 62-74957 to obtain a pellet of nylon 6 containing the montmorillonite. The pellet dissolved in 95% concentrated sulfuric acid in a concentration of 0.5 g/dl had a relative viscosity of 2.8 at a temperature of 25°C. Subsequently, thus synthesized nylon 6 was dried, and then fed into an extruder, melted in a cylinder which was heated at 270°C, and extruded through a T die orifice to obtain a sheet thereof. Thus obtained sheet was pressed and closely attached to a cast roll, which was set at 40°C, with the aid of air jetted from a nozzle, and then the sheet was cooled to prepare an unstretched film having a thickness of 160 $\mu m$. Subsequently, this unstretched film was soaked in a first water absorption tank, temperature of which had been set at 40°C. Then, the unstretched film was soaked in a second water absorption tank, which had been set at 60°C, and made absorb water to adjust the water content thereof. After the treatment in the second water absorption tank, the unstretched film was fed into a monoaxial film stretching machine and preheated at 120°C, then stretched in a longitudinal direction at 4-fold rate of expansion at a temperature of 130°C. Subsequently, the stretched film was heat-treated at a temperature of 220°C off-line, subjected to loosening treatment of 3% to obtain a film of nylon 6 which contains montmorillonite having a thickness of about 40 $\mu m$. Thus obtained film has white-silver appearance.

<<Determination of mean length of a side of tabular grains and aspect ratio thereof>>

The mean length of a side of the tabular grains is calculated by a process including measuring 100 lengths of a side of the tabular grains with a transmission electron microscope (JEM 2010, manufactured by JEOL Ltd.) and averaging them.
The aspect ratio is calculated in accordance with the following equation (I):

$$\text{Aspect ratio} = (\text{mean length of a side of tabular grains}) / (\text{mean thickness of}$$

$$\text{tabular grains}) \qquad\qquad \text{Equation (I)}$$

wherein the mean length of a side of tabular grains and the mean thickness of the tabular grains are calculated based on the length of a side and the thickness of the tabular grains, which are obtained by a process including preparing ultra-thin sections (50 nm) - 100 nm) using a microtome, and measuring the length of a side and the thickness of 100 points of the tabular grains by means of a transmission electron microscope (JEM 2010, manufactured by JEOL Ltd.).

<Determination of rate of voids having a nucleus in void-containing resin molded product>

A photograph of a cross-section of thus-produced void-containing resin molded product is taken and observed with a scanning electromicroscope at a magnification of ×600 to ×10,000, the number of voids having a nucleus and the total number of voids are counted per 1,000 $\mu m^2$ and then a ratio [(number of voids having a nucleus) / (total number of voids)] is calculated. The results are shown in Table 2.

<Determination of light transmittance of void-containing resin molded product>

The transmittance (%) of light with a wavelength 550 nm for thus-produced void-containing resin molded product was measured using a spectrophotometer. The results are shown in Table 2.

<Determination of reflectance of void-containing resin molded product>

The reflectance (%) of the void-containing resin molded product for light of wavelength 550 nm was measured using an integrating sphere-equipped spectrophotometer (V-570, manufactured by JASCO Corporation). The results are shown in Table 2.

<Determination of oxygen permeability of void-containing resin molded product>

The oxygen permeability (%) for thus-produced void-containing resin molded product was measured in accordance with the equal-pressure method (Test method: JIS7126B ASTM D3985) using OX-TRAN 2/20MH (manufactured by MOCON). The results are shown in Table 2. Note that the "oxygen transmittance" in Table 2 is a relative value relative to the oxygen transmission (%) of Comparative Example 1 which is fixed to 1.

<Determination of tearing strength of void-containing resin molded product>

The tearing strength of void-containing resin molded product is a measurement determined in accordance with Elmendorf tearing strength measuring method (JIS K 7128) using a digital elmendorf tear tester (SA-WP, manufactured by TOYO SEIKI SEISAKU-SHO, LTD). Note that the tearing resistance was evaluated according to the following criteria:

> A: Tearing strength is 20 N/cm or higher
> B: Tearing strength is 5 N/cm or higher and lower than 20 N/cm
> C: Tearing strength is lower than 5 N/cm

(Example 2)

The void-containing resin molded product of Example 2 was produced, and a rate of occurrence of voids having a nucleus, the light transmittance, the reflectance, the oxygen permeability, and the tearing strength were determined for the void-containing resin molded product of Example 2 in the same manner as in Example 1, except that tabular grains of montmorillonite (aspect ratio: 460; mean length of a side: 0.56 $\mu m$) was used instead of tabular grains of montmorillonite (aspect ratio: 200; mean length of a side: 1 $\mu m$). The results are shown in Tables 1 and 2.

(Example 3)

The void-containing resin molded product of Example 3 was produced, and a rate of occurrence of voids having a nucleus, the light transmittance, the reflectance, the oxygen permeability, and the tearing strength were determined for the void-containing resin molded product of Example 3 in the same manner as in Example 1, except that tabular grains of montmorillonite (aspect ratio: 800; mean length of a side: 1.2 $\mu$m) was used instead of tabular grains of montmorillonite (aspect ratio: 200; mean length of a side: 1 $\mu$m). The results are shown in Tables 1 and 2.

(Example 4)

The void-containing resin molded product of Example 4 was produced, and a rate of occurrence of voids having a nucleus, the light transmittance, the reflectance, the oxygen permeability, and the tearing strength were determined for the void-containing resin molded product of Example 4 in the same manner as in Example 1, except that tabular grains of montmorillonite (aspect ratio: 100; mean length of a side: 0.1 $\mu$m) was used instead of tabular grains of montmorillanite (aspect ratio: 200; mean length of a side: 1 $\mu$m). The results are shown in Tables 1 and 2.

(Example 5)

First, a type of nylon 6 having a relative viscosity of 2.9, which was measured by a process including dissolving the nylon 6 in 95% concentrated sulfuric acid in a concentration of 0.5 g/dl and measuring the relative viscosity at a temperature of 25°C, was synthesized. A pellet of the type of nylon 6 which contains montmorillonite (aspect ratio: 100; mean length of a side: 0.1 $\mu$m) was obtained with reference to a method (i.e., Example 1 of International Publication No. WO99/50340) according to International Publication No. WO99/50340 (Method B). Dodecyl amine had been added to the nylon 6 pellet in a concentration of 4 % by mass, and thereby the montmorillonite had been organofunctionalized. Subsequently, thus obtained nylon 6 pellet was melted, formed into film, and stretched in the same manner as in Example 1 to obtain the nylon 6 film of Example 5 which contains montmorillonite having a thickness of about 40 $\mu$m. Thus-produced film has white-silver appearance.

A rate of occurrence of voids having a nucleus, the light transmittance, the reflectance, the oxygen permeability, and the tearing strength were determined for thus-obtained void-containing resin molded product of Example 5 in the same manner as in Example 1. The results are shown in Tables 1 and 2.

(Example 6)

The void-containing resin molded product of Example 6 was produced, and a rate of occurrence of voids having a nucleus, the light transmittance, the reflectance, the oxygen permeability, and the tearing strength were determined for the void-containing resin molded product of Example 6 in the same manner as in Example 5, except that tabular grains of montmorillonite (aspect ratio: 850; mean length of a side: 1.2 $\mu$m) was used instead of tabular grains of montmorillonite (aspect ratio: 100; mean length of aside: 0.1 $\mu$m). The results are shown in Tables 1 and 2.

(Example 7)

First, the tabular particles of montmorillonite (aspect ratio: 100; and mean length of a side thereof: (0.1 $\mu$m) which had been synthesized with reference to a method according to JP-A No. 2007-308361 were organofunctionalized with 12-aminododecanoic acid, with reference to a method according to JP-A No.62-74957. Next, 50 kg dimethyl terephthalate and 60 kg 1,4-butanediol, and sodium 5-sulfoisophthalate in a concentration of 2.5 mol% for stabilizing the dispersion are added to 4 kg of the organofunctionalized montmorillonite with reference to a method according to JP-A No. 62-74957, and then thus-produced dispersion was subjected to a polycondensation reaction (in-situ polymerization: this method is referred to Method A of a grain packing method) to obtain a PBT pellet containing montmorillonite. The IV value of a PBT produced by the polycondensation reaction carried out under the same conditions, however, without the organofunctionalized montmorillonite was 0.73. Subsequently, thus synthesized PBT was dried, and then fed into an extruder, melted in a cylinder which was heated at a temperature of 260°C, and extruded through a T die orifice to obtain a sheet thereof. Thus obtained sheet was pressed and closely attached to a cast roll, which was set at 30°C, with the aid of air jetted from a nozzle, and then the sheet was cooled to prepare an unstretched film having a thickness of 230 $\mu$m. Subsequently, this unstretched film was fed into a monoaxial film stretching machine and stretched in a longitudinal direction at 5-fold rate of expansion at a temperature of45°C. Subsequently, the stretched film was heat-treated at a temperature of 100°C while keeping its tension off-line to obtain a PBT film which contains montmorillonite having a thickness of about 50 $\mu$m. Thus obtained film has silver appearance.

Furthermore, a rate of occurrence of voids having a nucleus, the light transmittance, the reflectance, the oxygen permeability, and the tearing strength were determined for thus-obtained void-containing resin molded product of Example 7 in the same manner as in Example 1.

(Example 8)

The void-containing resin molded product of Example 8 was produced, and a rate of occurrence of voids having a nucleus, the light transmittance, the reflectance, the oxygen permeability, and the tearing strength were determined for the void-containing resin molded product of Example 8 in the same manner as in Example 7, except that PBT (dimethyl terephthalate and 1,4-butanediol were used for monomers thereof) was used for a resin instead of PET (dimethyl terephthalate and ethylene glycol were used for monomers thereof) for producing the void-containing resin molded product of Example 8. The results are shown in Tables 1 and 2.

(Example 9)

The void-containing resin molded product of Example 9 was produced, and a rate of occurrence of voids having a nucleus, the light transmittance, the reflectance, the oxygen permeability, and the tearing strength were determined for the void-containing resin molded product of Example 9 in the same manner as in Example 1, except that tabular grains of synthetic mica (aspect ratio: 700; mean length of a side: 1 $\mu$m) was used instead of tabular grains of montmorillonite (aspect ratio: 200; mean length of a side: 1 $\mu$m) The results are shown in Tables 1 and 2.
Note that tetrasilylic mica (commercially available under the trade name of NA-TS, manufactured by TOPY Industries Ltd.) was directly used for the synthetic mica.

(Example 10)

The void-containing resin molded product of Example 10 was produced, and a rate of occurrence of voids having a nucleus, the light transmittance, the reflectance, the oxygen permeability, and the tearing strength were determined for the void-containing resin molded product of Example 10 in the same manner as in Example 5, except that tabular grains of saponite (aspect ratio: 100; mean length of a side: 1 $\mu$m) was used instead of tabular grains of montmorillonite (aspect ratio: 100; mean length of a side: 0.1 $\mu$m). The results are shown in Tables 1 and 2.
Note that in order to adjust its aspect ratio for use in Example 10, a commercially available saponite (Sumecton SA, manufactured by KUNIMINE INDUSTRIES CO., LTD) was subjected to hydrothermal treatment in accordance with a method according to JP-A No. 2007-308361.

(Example 11)

The void-containing resin molded product of Example 11 was produced, and a rate of occurrence of voids having a nucleus, the light transmittance, the reflectance, the oxygen permeability, and the tearing strength were determined for the void-containing resin molded product of Example 11 in the same manner as in Example 1, except that tabular grains of hectorite (aspect ratio: 640; mean length of a side: 0.55 $\mu$m) was used instead of tabular grains of montmorillonite, (aspect ratio: 200; mean length of a side: 1 $\mu$m). The results are shown in Tables 1 and 2.
Note that in order to adjust its aspect ratio for use in Example 11, a commercially available hectorite (Rucentite SWN, manufactured by Co-op Chemical Co., Ltd.) was subjected to hydrothermal treatment in accordance with a method according to JP-A No. 2007-308361.

(Example 12)

The void-containing resin molded product of Example 12 was produced, and a rate of occurrence of voids having a nucleus, the light transmittance, the reflectance, the oxygen permeability, and the tearing strength were determined for the void-containing resin molded product of Example 12 in the same manner as in Example 5, except that tabular grains of stevensite (aspect ratio: 300; mean length of a side: 0.3 $\mu$m) was used instead of tabular grains of montmorillonite (aspect ratio: 100; mean length of a side: 0.1 $\mu$m). The results are shown in Tables 1 and 2.
Note that in order to adjust its aspect ratio for use in Example 12, a commercially available stevensite (Sumecton ST, manufactured by KUNIMINE INDUSTRIES CO., LTD.) was subjected to hydrothermal treatment in accordance with a method according to JP-A No. 2007-308361.

(Example 13)

The void-containing resin molded product of Example 13 was produced, and a rate of occurrence of voids having a nucleus, the light transmittance, the reflectance, the oxygen permeability, and the tearing strength were determined for the void-containing resin molded product of Example 13 in the same manner as in Example 1, except that tabular grains of stevensite (aspect ratio: 700; mean length of a side: 1 $\mu$m) was used instead of tabular grains of montmorillonite (aspect ratio: 200; mean length of a side: 1 $\mu$m). The results are shown in Tables 1 and 2.

Note that in order to adjust its aspect ratio for use in Example 13, a commercially available stevensite (Sumecton ST, manufactured by KUNIMINE INDUSTRIES CO., LTD.) was subjected to hydrothermal treatment in accordance with a method according to JP-A No. 2007-308361.

(Comparative Example 1)

The void-containing resin molded product of Comparative Example 1 was produced, and a rate of occurrence of voids having a nucleus, the light transmittance, the reflectance, the oxygen permeability, and the tearing strength were determined for the void-containing resin molded product of Comparative Example 1 in the same manner as in Example 1, except that a pellet of nylon 6 was used instead of a pellet of nylon 6 containing montmorillonite. The results are shown in Tables 1 and 2.

(Comparative Example 2)

The resin molded product of Comparative Example 2 was produced, and a rate of occurrence of voids having a nucleus, the light transmittance, the reflectance, the oxygen permeability, and the tearing strength were determined for the resin molded product of Comparative Example 2 in the same manner as in Example 2, except that film of nylon 6 containing no void was produced by changing the preheating temperature of stretching from 120°C to 175°C, and the temperature of stretching from 130°C to 190°C. The results are shown in Tables 1 and 2.

(Comparative Example 3)

The void-containing resin molded product of Comparative Example 3 was produced, and a rate of occurrence of voids having a nucleus, the light transmittance, the reflectance, the oxygen permeability, and the tearing strength were determined for the void-containing resin molded product of Comparative Example 3 in the same manner as in Example 5, except that spherical silica (aspect ratio: 1.1; mean length of a side thereof: 1 $\mu$m) was used instead of tabular grains of montmorillonite (aspect ratio: 100; mean length of a side: 0.1 $\mu$m). The results are shown in Tables 1 and 2.

Note that a commercially available silica (SEAHOSTAR KE P100, manufactured by NIPPON SHOKUBAI CO., LTD.) was directly used for the spherical silica.

(Comparative Example 4)

The void-containing resin molded product of Comparative Example 14 was produced, and a rate of occurrence of voids having a nucleus, the light transmittance, the reflectance, the oxygen permeability, and the tearing strength were determined for the void-containing resin molded product of Comparative Example 14 in the same manner as in Example 1, except that tabular grains of stevensite (aspect ratio: 1010; mean length of a sidle 1 $\mu$m) was used instead of tabular grains of montmorillonite (aspect ratio: 200; mean length of a side: 1 $\mu$m). The results are shown in Tables 1 and 2.

Note that in order to adjust its aspect ratio for use in Comparative Example 4, a commercially available stevensite (Sumecton ST, manufactured by KUNIMINE INDUSTRIES CO., LTD.) was subjected to hydrothermal treatment in accordance with a method according to JP-A No. 2007-308361. In the hydrothermal treatment of Comparative Example 4, the aspect ratio of the stevensite was further increased by extending by 3 times the period of hydrothermal treatment of Example 13.

(Comparative Example 5)

The void-containing resin molded product of Comparative Example 5 was produced, and a rate of occurrence of voids having a nucleus, the light transmittance, the reflectance, the oxygen permeability, and the tearing strength were determined for the void-containing resin molded product of Comparative Example 5 in the same manner as in Example 1, except that a fibrous silicon carbide whisker (aspect ratio: 10-40; mean length of a side: 0.5 $\mu$m) was used instead of tabular grains of montmorillonite (aspect ratio: 200; mean length of a side: 1$\mu$m). The results are shown in Tables 1 and 2.

Note that a commercially available silicon carbide whisker (TOKA WHISKER, manufactured by Tokai Carbon Co., Ltd) was directly used for the fibrous silicon carbide whisker of Comparative Example 5.

Table 1

| | Grain | | | | Resin | Grain packing method |
|---|---|---|---|---|---|---|
| | Aspect ratio | Mean length of a side (μm) | Material | Shape | | |
| Ex. 1 | 200 | 1 | Montmorillonite | Tabular | Nylon 6 | Method A |
| Ex. 2 | 460 | 0.56 | Montmorillonite | Tabular | Nylon 6 | Method A |
| Ex. 3 | 800 | 1.2 | Montmorillonite | Tabular | Nylon 6 | Method A |
| Ex. 4 | 100 | 0.1 | Montmorillonite | Tabular | Nylon 6 | Method A |
| Ex. 5 | 100 | 0.1 | Montmorillonite | Tabular | Nylon 6 | Method B |
| Ex. 6 | 850 | 1.2 | Montmorillonite | Tabular | Nylon 6 | Method B |
| Ex. 7 | 100 | 0.1 | Montmorillonite | Tabular | PBT | Method A |
| Ex. 8 | 100 | 0.1 | Montmorillonite | Tabular | PBT | Method A |
| Ex. 9 | 700 | 1 | Synthetic mica | Tabular | Nylon 6 | Method A |
| Ex. 10 | 100 | 1 | Saponite | Tabular | Nylon 6 | Method B |
| Ex. 11 | 640 | 0.55 | Hectorite | Tabular | Nylon 6 | Method A |
| Ex. 12 | 300 | 0.3 | Stevensite | Tabular | Nylon 6 | Method B |
| Ex. 13 | 700 | 1 | Stevensite | Tabular | Nylon 6 | Method A |
| Comp. Ex. 1 | none | | | | Nylon 6 | - |
| Comp. Ex. 2 | 460 | 0.56 | Montmorillonite | Tabular | Nylon 6 (without void) | Method A |
| Comp. Ex. 3 | 1.1 | 1 | Silica | Spherical | Nylon 6 | Method B |
| Comp. Ex. 4 | 1010 | 2.1 | Stevensite | Tabular | Nylon 6 | Method A |
| Comp. Ex. 5 | 10-40 | 0.5 | Silicon carbide whisker | Fibrous | Nylon 6 | Method A |

Table 2

| | Rate of void with nucleus | Light transmittance (%) | Reflectance (%) | Oxygen permeability | Tearing resistance | Remarks |
|---|---|---|---|---|---|---|
| Ex. 1 | 2.3 | 21 | 76 | 0.7 | A | |
| Ex. 2 | 2.8 | 19 | 73 | 0.7 | A | |
| Ex. 3 | 3.2 | 26 | 76 | 0.7 | A | |
| Ex. 4 | 2.2 | 20 | 71 | 0.7 | A | |
| Ex. 5 | 1.8 | 26 | 69 | 0.7 | A | |
| Ex. 6 | 1.5 | 21 | 70 | 0.7 | A | |
| Ex.7 | 2.2 | 18 | 79 | 0.7 | A | |
| Ex. 8 | 2.2 | 19 | 80 | 0.7 | A | |
| Ex. 9 | 3.1 | 22 | 74 | 0.7 | A | |
| Ex. 10 | 2.6 | 22 | 77 | 0.7 | A | |
| Ex. 11 | 2.8 | 27 | 72 | 0.7 | A | |
| Ex. 12 | 1.9 | 18 | 71 | 0.7 | A | |

(continued)

|  | Rate of void with nucleus | Light transmittance (%) | Reflectance (%) | Oxygen permeability | Tearing resistance | Remarks |
|---|---|---|---|---|---|---|
| Ex.13 | 3.3 | 23 | 79 | 0.7 | A | |
| Comp. Ex. 1 | 0 | 25 | 70 | 1 (standard value) | C | |
| Comp. Ex. 2 | 0 | 55 | 48 | 0.6 | A | |
| Comp. Ex. 3 | 3.3 | 33 | 72 | 1.1 | C | |
| Comp. Ex. 4 | 5.9 | - | - | - | - | Film formation failed |
| Comp. Ex. 5 | 2.4 | 24 | 71 | 1.2 | C | |

As shown in Tables 1 and 2, the tearing resistance (tearing strength) of the void-containing resin molded product of the present invention may be improved by the inclusion of the tabular grains in the void-containing resin molded product and only monoaxial stretching, without biaxial stretching.

The void-containing resin molded product of the present invention may be used for image receiving layers of thermosensitive transfer image receiving sheets in addition to for packaging materials, and may improve preventability of color fade of pigments in which both light and oxygen are involved in the degradation process.

**Claims**

1. A void-containing resin molded product, comprising:

   tabular grains each having an aspect ratio of 2 to 1,000,
   wherein the void-containing resin molded product contains voids therein,
   and
   wherein the aspect ratio of the tabular grain is defined as the following Equation (I):

$$\text{Aspect ratio} = (\text{Mean length of a side of the tabular grain}) / (\text{Mean thickness of the tabular grain}) \qquad \text{Equation (I)}$$

2. The void-containing resin molded product according to claim 1, wherein the tabular grains have a mean side length of 0.002 $\mu$m to 1 $\mu$m.

3. The void-containing resin molded product according to any one of claims 1 and 2, wherein the tabular grain is layered silicate.

4. The void-containing resin molded product according to claim 3, wherein the layered silicate is layered phyllosilicate.

5. The void-containing resin molded product according to claim 4, wherein the layered phyllosilicate is at least one selected from montmorillonite, saponite, viderite, nontronite, hectorite, stevensite, vermiculite, and hallosite.

6. The void-containing resin molded product according to any one of claims 1 to 5, wherein the void-containing resin molded product has optical transmittance of 30% or less to light having a wavelength 550 nm.

7. The void-containing resin molded product according to any one of claims 1 to 6, wherein the voids have substantially no nucleus therewithin.

8. The void-containing resin molded product according to any one of claims 1 to 6, wherein each of the voids have a

nucleus therewithin.

# FIG. 1

# FIG. 2A

First direction for streching (longitudinal direction for stretching)

# FIG. 2B

1a   100   Frame encompassing
region for measurement     1

50

r

# FIG. 2C

1a   100   Frame encompassing
region for measurement     1

50

L

Europäisches
Patentamt

European
Patent Office

Office européen
des brevets

# EUROPEAN SEARCH REPORT

Application Number

EP 10 17 0888

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 417 262 B1 (TURNER SAM RICHARD [US] ET AL) 9 July 2002 (2002-07-09) * claims 1,9,10,13,14,15,18,19 * * column 1, line 25 - line 35 * * column 2, line 12 - line 23 * * column 4, line 46 - line 53 * * column 5, line 29 - line 39 * * column 8, line 56 - line 61 * * Examples 8 and 9; column 18, line 50 - column 19, line 30 * * Comparative Example 2; column 19, line 46 - line 63 * ----- | 1-8 | INV. C08K3/34 C08K9/04 C08J5/18 B29C55/02 B29C67/20 C08K7/00 B65D65/20 B65D81/24 B65D81/30 |
| Y | US 5 945 205 A (KELLER LAJOS E [BE] ET AL) 31 August 1999 (1999-08-31) * claim 1 * * column 2, line 9 - line 41 * * column 3, line 49 - line 56 * * column 4, line 6 - line 21 * ----- | 1-8 | |
| Y | US 5 972 448 A (FRISK PETER [US] ET AL) 26 October 1999 (1999-10-26) * claim 2 * * column 1, line 39 - line 55 * * column 4, line 20 - line 33 * * column 10, line 53 - column 11, line 20 * ----- | 1-8 | TECHNICAL FIELDS SEARCHED (IPC)  C08J C08K B29C B65D |

The present search report has been drawn up for all claims

| Place of search | Date of completion of the search | Examiner |
|---|---|---|
| The Hague | 21 October 2010 | Costantini, Nicola |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 17 0888

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2010

| Patent document cited in search report | | Publication date | Patent family member(s) | | Publication date |
|---|---|---|---|---|---|
| US 6417262 | B1 | 09-07-2002 | NONE | | |
| US 5945205 | A | 31-08-1999 | NONE | | |
| US 5972448 | A | 26-10-1999 | US | 5876812 A | 02-03-1999 |
| | | | US | 5916685 A | 29-06-1999 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 08129715 A
- JP 4202540 A
- JP 5293916 A
- JP 2007308361 A
- JP 62074957 A
- WO 9950340 A